# EUROPEAN PATENT SPECIFICATION

(11) **EP 1 930 973 B1**
(45) Date of publication and mention of the grant of the patent: **09.06.2010**
(21) Application number: 07023573.4
(22) Date of filing: 05.12.2007
(51) Int. Cl.: H01M 8/10

(54) **Liquid fuel composition and fuel cell using the same**
Flüssige Brennstoffzusammensetzung und Brennstoffzelle, die diese verwendet
Composition de combustible liquide et cellule à combustible l'utilisant

(30) Priority: 06.12.2006 KR 20060122992
(43) Date of publication of application: 11.06.2008
(73) Proprietor: Gwangju Institute of Science and Technology (GIST), Buk-gu Gwangju 500-172 (KR)
(72) Inventor: Kim, Won-Bae Dept. of Materials for Sci.&Eng.,GIST,1,, Gwangju 500-712 (KR); Choi, Sung-Mock Dept. of Materials for Sci.&Eng.,GIST,1,, Gwangju 500712, (KR); Seo, Min-Ho Dept.of Materials for Sci.&Eng.,GIST,1,, Gwangju 500-712, (KR); Kim, Jea-Hong, Gwangju 500-712 (KR)
(74) Representative: TER MEER - STEINMEISTER & PARTNER GbR

(56) References cited:
- US-A1- 2006 024 539
- US-A1- 2006 141 334
- US-A1- 2006 165 576

## Description

### BACKGROUND OF THE INVENTION

This application claims priority to Korean Patent Application No. 10-2006-0122992, filed on December 6, 2006, in the Korean Intellectual Property Office, the entire contents of which are hereby incorporated by reference.

### 1. Field of the Invention

The present invention relates to fuel cell technology, more particularly, to a fuel composition for improving performance of fuel cells and a fuel cell manufactured using the same.

### 2. Description of the Related Art

A fuel cell is a high efficiency electrochemical system to convert energy generated by chemical reaction into electric energy. Compared with other electric energy resources, the fuel cell has advantages over them such as high efficiency and environmental sustainability. In this regard, it is considered that fuel cell technologies are essential for developments of original advanced technologies in the country.

Although a demand for fuel cell which is an electric power source with high efficiency and environmental sustainability grows, there are still technical difficulties which interfere with use of the fuel cell in wide range of applications.

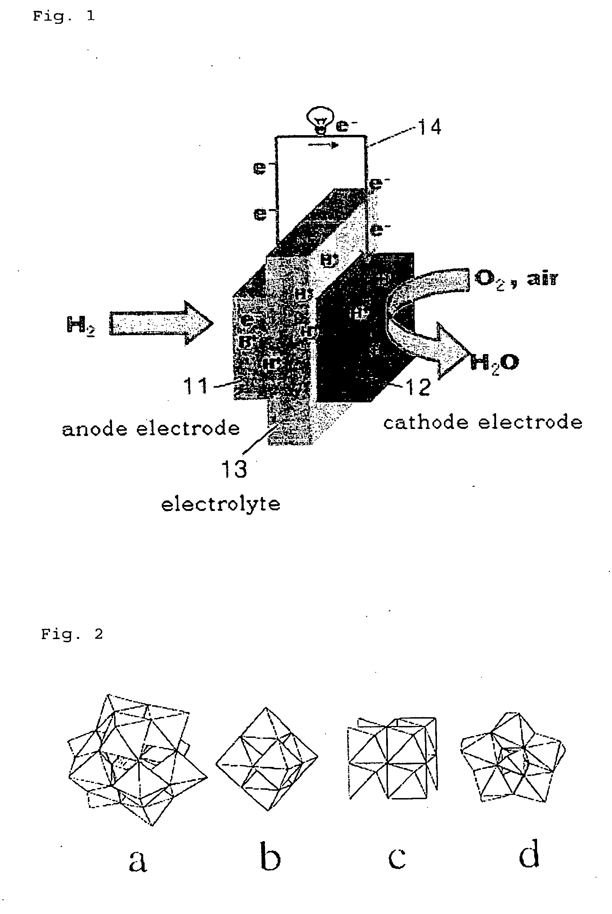

Fig. 1 is a schematic view illustrating one of conventionally known fuel cells.

In general, a fuel cell comprises an anode electrode 11, a cathode electrode 12 and an electrolyte 13 disposed between the electrodes 11 and 12, both of the electrodes being connected to each other by an electric circuit 14. A typical fuel cell uses hydrogen H₂ as fuel and oxygen O₂ as oxidant Hydrogen generates protons and electrons according to the following chemical reaction 1. Electrons flow to the electric circuit 14 connecting the electrodes 11 and 12, while protons pass through the electrolyte 13 in contact with the anode electrode 11 and the cathode electrode 12.

[Chemical reaction 1] H₂ → 2H⁺ + 2e⁻

At the same time, electrons and protons generated from the anode electrode 11 are electrochemically reduced at the cathode electrode 12 by the reductant such as oxygen to produce water as a reactant according to the following chemical reaction 2:

[Chemical reaction 2] 1/2 O₂ + 2H⁺ + 2e⁻ → H₂O

As described above, a fuel cell directly using hydrogen fuel is a simple, convenient and clean cell with superior efficiency. But, this has restrictions on use thereof due to high flammability of the fuel. For instance, as hydrogen storage and transportation require high pressure tanks, hydrogen-powered fuel cells inevitably have limitations on use thereof in a variety of applications.

For the reasons described above, hydrogen is usually applied in the form of oxygenated hydrocarbons as fuel rather than direct use of hydrogen element itself. The oxygenated hydrocarbon fuel is a liquid phase fuel, which has higher energy density than hydrogen and is simple and more convenient than gaseous materials for storage, carrying, handling and/or transportation thereof. As a result, there have been proposed applications of oxygenated hydrocarbons including, for example: a direct oxidation process of oxygenated hydrocarbons such as alcohol or methanol; a preparation method of hydrogen by modifying oxygenated hydrocarbons, etc.

A direct (hydrogen) fuel feeding fuel cell is easy and simple to use in view of directly feeding the fuel to the fuel cell. However, if oxygenated hydrocarbon based fuel is directly introduced to a fuel cell, it is difficult for a catalyst to completely oxidize the fuel and carbon monoxide and other carbonaceous intermediates are usually generated according to the following chemical reaction 3:

[Chemical reaction 3] CH₃OH → CO + 4H⁺ + 4e⁻

Even when the intermediates (mostly carbon monoxide) are used in only a small amount, these are securely adsorbed to a platinum catalyst often used in low temperature fuel cells, poison the catalyst (as called "catalyst poisoning") and reduce activity of the catalyst.

Also, hydrocarbon molecules contained in a biomass material generate plenty of carbon monoxide through catalytic decomposition.

As described above, direct injection type liquid fuels which produce carbon monoxide and other carbonaceous intermediates during electrochemical oxidation have significant problems, particularly, durability of the fuel cells.

In order to solve the above problems, conventional techniques and proposals have focused on developing catalysts with superior poisoning resistance. Particularly, although PtRu/C (platinum-ruthenium/carbon alloy) catalyst has favorable performance, this also has many difficulties and/or limitations in efficiently eliminating carbon monoxide and needs an additional expensive catalyst.

Since most of existing fuel cells work in a strong acidic environment of pH 2 or less, appropriate oxidation assistants are not readily discovered. In case of the low temperature fuel cell, it is very difficult to oxidize carbon monoxide which was strongly adsorbed to a catalyst.

### SUMMARY OF THE INVENTION

Accordingly, the present invention is directed to solve the problems of conventional arts in regard to fuel cells using hydrocarbon fuels as described above and, an object of the present invention is to provide a fuel composition capable of efficiently oxidizing carbon monoxide and other carbonaceous intermediates.

Another object of the present invention is to provided a fuel cell with improved performance by using the fuel composition according to the present invention.

In order to accomplish the above former object, the inventive fuel composition comprises: at least one of oxygenated hydrocarbons; and at least one polyoxometalate and/or at least one oxidation-reduction reactive anion (hereinafter, referred to as "redox anion") caused by dissolution of polyoxometalate in an organic medium containing solution and/or an aqueous solution.

Oxygenated hydrocarbons may include compounds having -OH functional groups.

Alternatively, oxygenated hydrocarbons may include at least one selected from CH₄O, C₂H₆O, C₄H₁₀O, C₅H₁₂O, C₆H₁₄O, ethyleneglycol, glycerin and compounds having -COOH and/or - CHO groups.

Preferably, anions contained in the fuel composition according to the present invention may comprise at least one selected from Keggin anions, Wells-Dawson anions, Lindqvist anions and Anderson anions.

Preferably, polyoxometalate and/or at least one redox anion caused by dissolution of polyoxometalate can be comprised in a content ranging from 0.1 × 10⁻⁹M to 0.5M to total 1 liter of the residual ingredients containing at least one of the above mentioned oxygenated hydrocarbons.

In order to accomplish the above latter object, the inventive fuel cell uses the fuel composition according to the present invention as fuel.

Such fuel cell of the present invention uses a catalyst made of noble metals and/or noble metal alloys.

Conventional techniques and/or proposals have substantially concentrated on researches and studies for catalysts with enhanced durability, whereas the present invention suggests an oxidation method of carbonaceous intermediates using a specific additive for fuel, which was substantially not attempted or tried hitherto, as well as applications thereof.

The present invention plays an important role in development of portable fuel cells including, for example, DMFC (direct methanol fuel cell), DAFC (direct alcohol fuel cell), DFAFC (direct formic acid fuel cell) and the like. Briefly, the present invention utilizes polyoxometalate as an oxidation assistant for low temperature oxidation at less than 100°C in a fuel anode electrode in addition to oxygenated hydrocarbons (or carbohydrates) such as ethanol, ethyleneglycol, formic acid, etc.

Polyoxometalate used in the present invention is previously known to be stable under a strong acidic environment of not higher than pH 2. or less and, for molybdenum-containing polyoxometalate, this compound exhibits reductive property in the range of capable adsorbing and desorbing carbon monoxide, therefore, can selectively oxidize carbon monoxide. Alternatively, polyoxometalates containing tungsten, vanadium and/or other elements have different redox potentials depending on the elements, which present a preferable solution to selectively oxidize and eliminate undesirable byproducts of fuel cells using various fuels including, for example, ethanol.

It is expected that polyoxometalate described above will be applicable in commonly available catalysts based on noble metals and/or noble metal alloys and, additionally, a variety of alloy catalysts and/or non-noble metal catalysts to be developed in the future.

### BRIEF DESCRIPTION OF THE DRAWINGS

These and other objects, features, aspects, and advantages of preferred embodiments of the present invention will be more fully described in the following detailed description, taken in conjunction with the accompanying drawings. In the drawings:
Fig. 1 is a schematic view illustrating a fuel cell generally known in the related arts;
Fig. 2 illustrates an example of structures of anions caused by polyoxometalate in an organic solution and/or an aqueous solution;
Fig. 3 is a diagram illustrating electrochemical behavior of various heteropoly acid (HPA) anions depending on pH values and potentials;
Fig. 4 illustrates a three-electrode system used in experiments according to examples of the present invention;
Fig. 5 is a graph illustrating cyclic voltammograms(CV) obtained when polyoxometalate (H₃PMo₁₂O₄₀) is added or is not added to a methanol solution in the presence of Pt/C (platinum/carbon alloy) catalyst as one of noble metal catalysts (model name, ETEK) according to a preferred embodiment of the present invention;
Fig. 6 is a graph illustrating CV curves obtained when polyoxometalate is added or is not added to a methanol solution in the presence of PtRu/C (platinum-ruthenium/carbon alloy) catalyst (ETEK) according to a preferred embodiment of the present invention;
Fig. 7 is a graph illustrating CV curves obtained when polyoxometalate is added or is not added to an ethanol solution in the presence of PtRu/C catalyst (ETEK) according to a preferred embodiment of the present invention;
Fig. 8 is a graph illustrating CV curves obtained when polyoxometalate is added or is not added to an ethyleneglycol solution in the presence of PtRu/C catalyst (ETEK) according to a preferred embodiment of the present invention;
Fig. 9 is a graph illustrating Current-voltage (I-V) curves in relation to current and cell voltage obtained when fuel compositions with or without polyoxometalate are introduced into an anode electrode according to a preferred embodiment of the present invention;
Fig. 10 is a graph illustrating methanol oxidation current densities displayed in Long-Term Cycles Stability type CV curves when polyoxometalate is added or is not added to a methanol solution in the presence of PtRu/C catalyst (ETEK) according to a preferred embodiment of the present invention;
Fig. 11 is a graph illustrating methanol oxidation current ratios displayed in Long-Term Cycles Stability type CV curves when polyoxometalate is added or is not added to a methanol solution in the presence of PtRu/C catalyst (ETEK) according to a preferred embodiment of the present invention; and
Fig. 12 is a graph illustrating CV curves obtained when H₃PMo₁₂O₄₀ is added to a methanol solution with different concentrations in the presence of PtRu/C catalyst as a noble metal catalyst according to a preferred embodiment of the present invention.

### DETAILED DESCRIPTION OF THE INVENTION

Hereafter, the present invention will be described in detail with reference to the accompanying drawings.

Again referring to the chemical reaction 3 and as described above, if the oxygenated hydrocarbon fuel is directly introduced into a fuel cell, the catalyst has a difficulty in complete oxidation of the fuel and, thus, generates carbon monoxide (hereinafter, sometimes referred to as "CO") and carbonaceous intermediates according to the chemical reaction 3 during use of the fuel cell:

[Chemical reaction 3] CH₃OH → CO + 4H⁺ + 4e⁻

The intermediates (mostly carbon monoxide) become the most common cause to reduce fuel cell efficiency in case of low temperature fuel cell, even when the intermediates are contained in only a small amount. Particularly, for carbon monoxide, it strictly binds to the catalyst used in the fuel cell and causes poisoning of the catalyst.

As such catalyst poisoning reduces active sites of the catalyst and results in decrease in activity of the catalyst, overall efficiency of the fuel cell is lowered. In general, hydrocarbon molecules contained in a biomass also generate plenty of carbon monoxide through catalytic decomposition.

Conventional investigations and studies have been focused on production of high purity hydrogen through fuel modification, however, this requires multiple stage catalyst processes and/or addition processes in modification and/or treatment of fuel, since concentration of carbon monoxide must be controlled to be less than 10ppm in order to use hydrogen in hydrogen fuel cells for low temperature solid electrolytes.

On the other hand, the present invention proposes addition of polyoxometalate (hereinafter, often referred to as "POM") as an oxidation assistant to fuel. That is, the fuel composition of the present invention comprises oxygenated hydrocarbons and polyoxometalate. POM can oxidize carbon monoxide according to the following chemical reaction 4, thereby generating hydrogen gas. Carbon monoxide was considered to be one of catalyst poisoning materials to be removed on the basis of traditional knowledge and/or existing techniques. However, in case of the fuel composition according to the present invention, carbon monoxide functions as an appropriate oxidation assistant for active electrochemical oxidation of oxygenated hydrocarbons in an anode electrode.

Polyoxometalate used in the present invention principally means a compound containing polyoxometalate and/or anions which are caused by polyoxometalate and have redox reactivity in an aqueous solution and/or an organic medium containing solution, namely, heteropolyanions (hereinafter often referred to as "HPA").

Table 1 shows characteristics of anions caused by dissolution of polyoxometalate in an organic solution and/or an aqueous solution.

**[TABLE 1]**

| | |
|---|---|
| 1 | The same behavior as metal oxides |
| 2 | Stable to water, air and/or temperature (benefits for processing) |
| 3 | Large size (diameter, 6-25Å) |
| 4 | Independent dimension/structure (restricted geometric factor) |
| 5 | Anion (range of charge, -3 to -14 valents) |
| 6 | High ionization weight (10³ to 10⁴) |
| 7 | Completely oxidized compound/reductivity |
| 8 | Varied oxidation numbers for addenda atom (E_{1/2} = 0.5 to - 0.1V vs SCE) |
| 9 | Color of oxidized compound/reduction form |
| 10 | Photo-reduction |
| 11 | Arrhenius acids, pKa < 0 |
| 12 | Structural form containing 70 or more of elements (processing merit). |
| 13 | Acidic form readily dissolved in water and solvent (such as ether, alcohol, ketone) carrying oxygen; Also easily soluble in aromatic or petroleum based solvents (processing merit). |
| 14 | Hydrolytic property causing incomplete structure |

| | |
|---|---|
| (reference: Chem. Rev. 1998, 98, 359-387) | |

The anions described above include transitional metals such as molybdenum Mo, vanadium V, tungsten W, etc. as well as oxygen atoms. Based on structures of individuals anions, they have inherent features and are classified into or defined with different names thereof.
Fig. 2 illustrates an example of structures of the anions caused by dissolution of polyoxometalate in an organic solution and/or an aqueous solution. From Fig. 2, "a" represents Keggin anions (PMo₁₂O₄₀³⁻), "b" represents Lindqvist anions (Mo₆O₁₉²⁻), "c" represents β-octamolybdate anions (β - [Mo₈O₂₆]⁴⁻), and "d" represents [S₂Mo₅O₂₃]⁴⁻ anions, respectively (reference: Chem. Rev. 1998, 98, 219-237).

The heteropolyanions caused by polyoxometalate applicable in the present invention include, but are not limited to, at least one selected from Keggin anions (PMo₁₂O₄₀³⁻), Well-Dawson anions (P₂W₁₈O₆₂⁶⁻), Lindqvist anions (Mo₆O₁₉²⁻) and Anderson anions ([TeMoO₆O₂₆)⁶⁻) (reference: Chem. Rev. 1998, 98, 273-296).

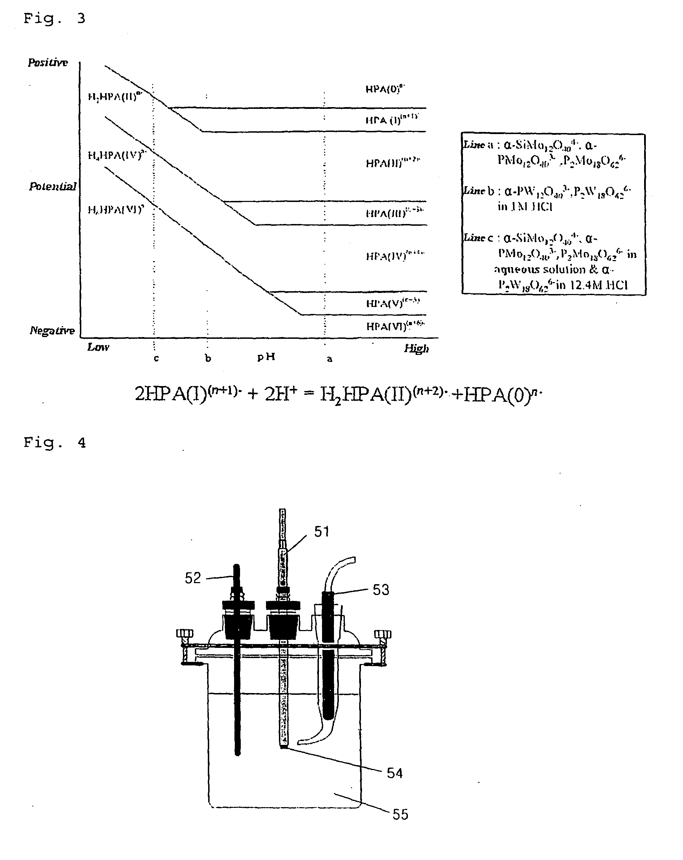

Fig. 3 is a diagram illustrating electrochemical behavior of various anions HPA depending on pH values and potentials.

Based on a principle according to the chemical reaction 4, polyoxometalate improves poisoning resistance of noble metal catalysts while oxidizing carbon monoxide and, additionally, generates hydrogen gas preferably used as fuel. The chemical reaction 4 is the one using Keggin anions as a preferred embodiment of the present invention:

[Chemical reaction 4] CO (g) + H₂O (1) + PMo₁₂O₄₀³⁻ (aq) **→** CO₂ (g) + 2H⁺ (aq) + PMo₁₂O₄₀⁵⁻ (aq)

Oxygenate hydrocarbon used in the present invention is a compound having -OH functional groups, which include, for example, at least one selected from CH₄O, C₂H₆O, C₄H₁₀O, C₅H₁₂O, C₆H₁₄O, ethyleneglycol, glycerin and compounds having -COOH and/or -CHO groups.

Polyoxometalate and/or at least one of anions caused by polyoxometalate is preferably included in a content ranging from 0.1 x 10⁻⁹M to 0.5M to total 1 liter of the residual ingredients containing at least one of the above mentioned oxygenated hydrocarbons.

Particular experimental examples in regard to fuel compositions according to the present invention will be described in detail below. These examples describe a part of experiments carried out with particular ones of oxygenated hydrocarbons and polyoxometalates applicable in the present invention.

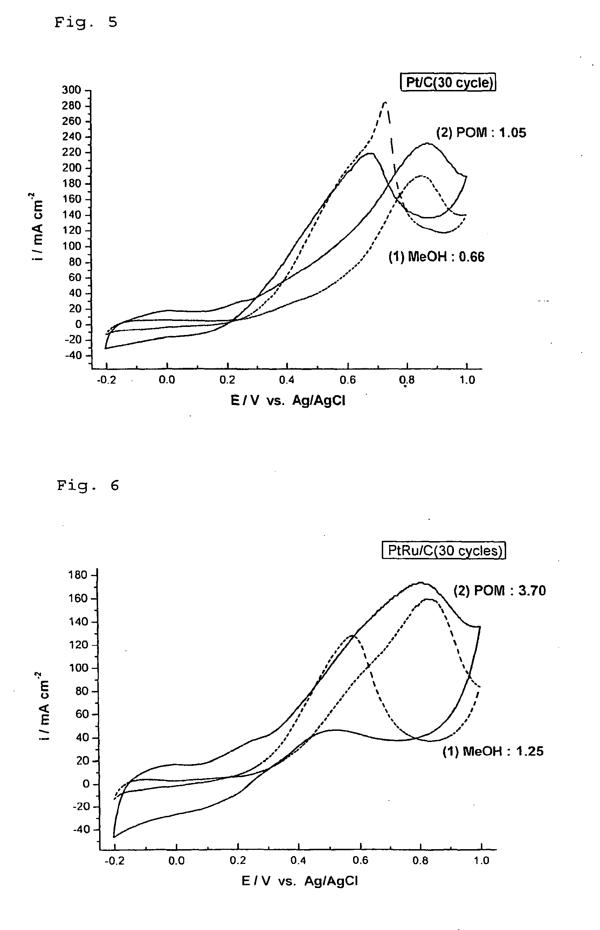

In order to evaluate electrochemical performance and characteristics of the fuel composition by addition of specific oxidation assistant according to the present invention, a three(3)-electrode system was prepared as shown in Fig. 4 and was subjected to comparison of both results of each, before (inventive embodiment) and after (comparative control) adding the oxidation assistant to the system. For reference, red solid lines shown in Figs. 5 to 11 illustrate the present embodiments while black (dot) lines display the comparative controls. Left side in Fig. 4 is a schematic view of the three-electrode system and right side is a photograph of the three-electrode system, which was directly used in the experiments of the present invention.

Referring to Fig. 4, first of all, the three-electrode system was fabricated by preparing a working electrode 51 made of glass carbon, a counter electrode 52 made of platinum wire and a reference electrode RE 53 made of Ag/AgCl. Numerical symbol 54 represents a catalyst, in which all of catalytic materials were applied to a constant area of 0.07cm². Numeral symbol 55 represents an electrolyte. Before the electrochemical experiment, the fabricated system was sufficiently stabilized. The experiment was conducted using the following equipment, AUTOLAB model PGSTAT 30 available from Eco Chemie Company and Solartron analytical 1400 and/or 1400E available from AMETEK Company.

### EXPERIMENTAL EXAMPLE 1

Fig. 5 is a graph illustrating CV curves obtained when polyoxometalate (POM) is added or is not added to a methanol solution in the presence of Pt/C (platinum/carbon alloy) catalyst as one of noble metal catalysts (model name, ETEK) according to a preferred embodiment of the present invention. Fig. 6 is a graph illustrating CV curves obtained when POM is added or is not added to a methanol solution in the presence of PtRu/C (platinum-ruthenium/carbon alloy) catalyst (ETEK) according to a preferred embodiment of the present invention. Numbers shown in the following drawings represent i_{f}/i_{b} values of their corresponding fuels.

Referring Figs. 5 and 6, cyclic voltammogram and potentiostat experiments were conducted to evaluate electrochemical characteristics of a sample prepared by adding phosphomolybdic acid hydrate H₃PMo₁₂O₄₀ to a methanol solution. The fabricated three-electrode system (Fig. 4) underwent the electrochemical experiment by carrying a catalyst ink in the working electrode under conditions of constant scan rate (mVs⁻¹) and potential range (V).

Firstly, a first solution prepared by adding 0.5M H₂SO₄ and 2M CH₃OH to 40wt.% Pt/C catalyst (ETEK) and a second solution prepared by adding 0.001M H₃PMO₁₂O₄₀ to the first solution were subjected to the cyclic voltammogram (CV) experiment, respectively.

Fig. 5 shows a result of testing Pt/C catalyst (ETEK) at the scan rate of 50mVs⁻¹ while Fig. 6 shows a result of testing PtRu/C catalyst (ETEK) at the scan rate of 50mVs⁻¹.

Each of CV experiments was repeated 30 cycles and the catalyst was sufficiently activated before the experiment. Black dot lines 1 shown in Figs. 5 and 6 represent CV curves of the methanol solution while red solid lines 2 represent CV curves of the solution containing POM.

From CV curves of the methanol solution 1 shown in Figs. 5 and 6, it was found that current density had a peak value of more than 0(zero) when potential was scanned in a negative direction. This value is a current density obtained by oxidation of various carbonaceous intermediates and byproducts, which were not completely oxidized when methanol underwent oxidation by a catalyst electrode in case that the potential was scanned in a positive direction. As a catalyst has increase in activity to methanol fuel, the catalyst efficiently oxidizes methanol. Therefore, the catalyst demonstrates higher current density value If under lower over-potential in the positive direction and, conversely, lower current density value I_{b} in the negative direction. I_{f}/I_{b} value becomes a criterion to indicate how a catalyst efficiently reacts with a particular fuel. As illustrated in (1) and (2) of Figs. 5 and 6, it was demonstrated that I_{f}/I_{b} value was increased for the catalyst after POM addition, compared with the catalyst before POM addition.

Furthermore, it was found that Keggin anion type PMo₁₂O₄₀³⁻ effectively oxidizes carbonaceous intermediates and byproducts without lowering the current density.

Especially, PtRu/C curves in Fig. 6 themselves show improved performance of methanol in the electrochemical reaction. Ruthenium metal dissociates water to produce hydroxyl ions OH⁻, which are, in turn, reacted with CO poisoning the catalyst to oxidize CO and generate CO₂ thereby improving performance of a catalyst (called as "Bifunctional effect"). It was understood that I_{f/}I_{b} value is very high when using the catalyst and adding the anion type PMo₁₂O₄₀³⁻ (HPAs). That is, the catalyst with poisoning resistance to CO can exhibit highly improved activity if using a specific oxidation assistant proposed in the present invention.

It is expected that the present inventive fuel composition which represents high oxidation effect even with a small amount of oxidation assistant, can be used in a wide range of applications, although novel catalysts with a plurality of advantages including, for example, excellent poisoning resistance and/or activity will be developed in the future.

### EXPERIMENTAL EXAMPLE 2

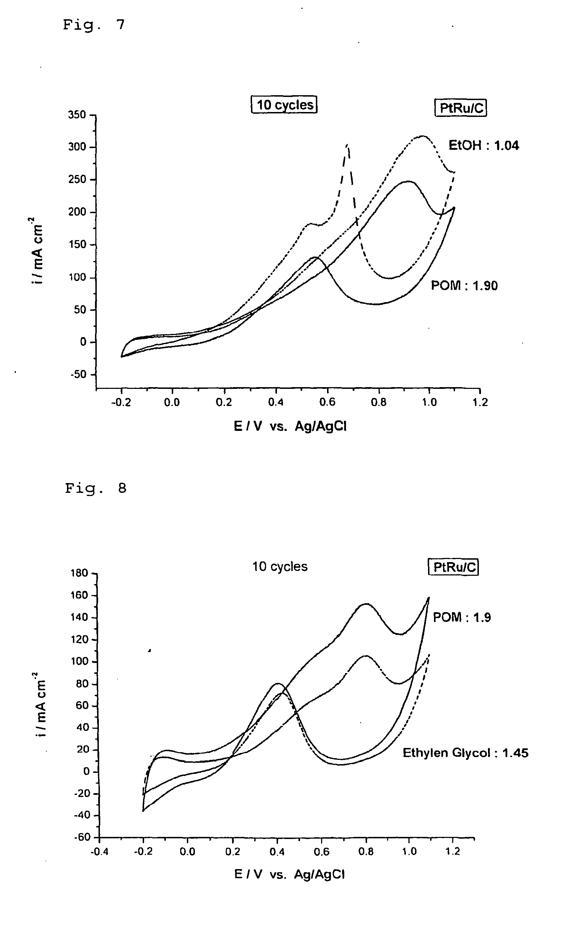

Fig. 7 is a graph illustrating CV curves obtained when polyoxometalate is added or is not added to an ethanol solution in the presence of PtRu/C catalyst (ETEK) according to a preferred embodiment of the present invention.

Results of CV and potentiostat experiments for a sample which was prepared by adding H₃PMo₁₂O₄₀ to the ethanol solution in the presence of PtRu/C catalyst (red solid lines) as a noble metal catalyst for fuel cell were compared with results of the same experiments for another sample obtained before addition of H₃PMo₁₂O₄₀ to the ethanol solution. It was identified that these results are similar to the ones from Experimental example 1.

### EXPERIMENTAL EXAMPLE 3

Fig. 8 is a graph illustrating CV curves obtained when polyoxometalate is added or is not added to an ethyleneglycol solution in the presence of PtRu/C catalyst (ETEK) according to a preferred embodiment of the present invention.

Results of CV and potentiostat experiments for a sample which was prepared by adding H₃PMo₁₂O₄₀ to the ethanol solution in the presence of PtRu/C catalyst (red solid lines) as a noble metal catalyst for fuel cell were compared with results of the same experiments for another sample obtained before addition of H₃PMo₁₂O₄₀ to the ethanol solution.

It was identified that these results are similar to the ones from Experimental example 1.

### EXPERIMENTAL EXAMPLE 4

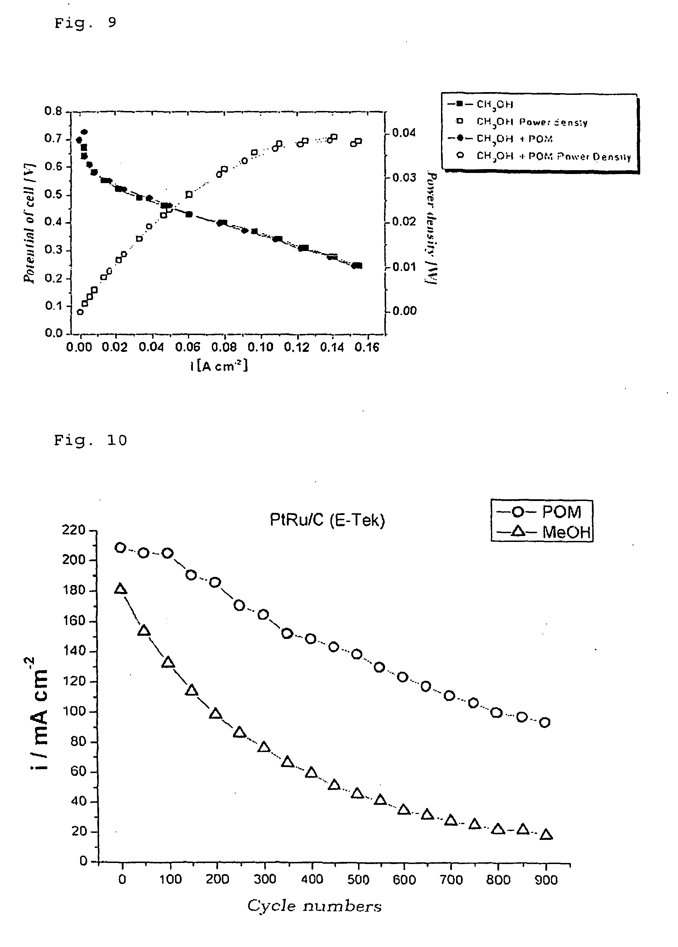

Fig. 9 is a graph illustrating I-V curves in relation to current and cell voltage obtained when fuel compositions with or without POM are introduced into an anode electrode according to a preferred embodiment of the present invention.

In order to evaluate performance of fuel unit cell, I-V curves were obtained using Fuel Cell Station available from Fuel Cell Technology Company and MEA was measured using MEA for 5cm² DMFC available from NANO BEST Corp. The experiments were conducted under a sufficiently stabilized condition by working the unit cell at 0.3V while introducing 1mole of methanol solution into the cell for 10 hours. The fuel, that is, 1M methanol solution flowed into an anode electrode at a flow rate of 0.63 (ml/min), while 100 sccm of air flowed into a cathode electrode under pressure of 2 atm.

On the other hand, the above procedure was repeated with a solution containing 5 x 10⁻⁵ M POM in 1M methanol in order to obtain CV curves. From the CV curves, it was found that the unit cell has no reduction in performance (Fig. 9).

### EXPERIMENTAL EXAMPLE 5

Fig. 10 is a graph illustrating methanol oxidation current densities displayed in Long-Term Cycles Stability type (abbrev. to "LTCS") CV curves when POM is added or is not added to a methanol solution in the presence of PtRu/C catalyst (ETEK) according to a preferred embodiment of the present invention.

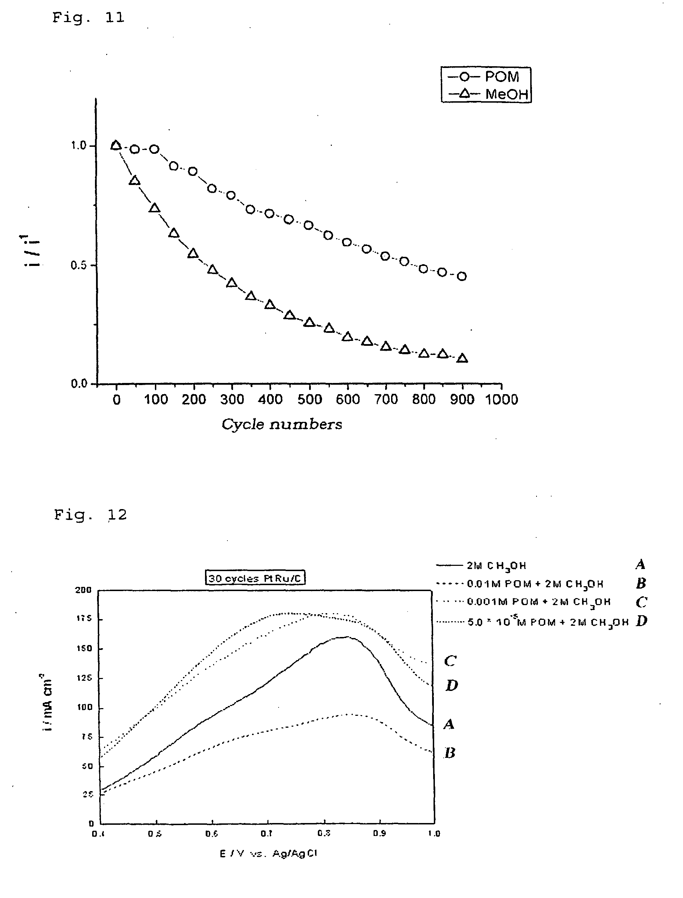

Fig. 11 is a graph illustrating methanol oxidation current ratios displayed in LTCS type CV curves when POM is added or is not added to a methanol solution in the presence of PtRu/C catalyst (ETEK) according to a preferred embodiment of the present invention.

In order to identify durability of the anode electrode, LTSC type CV experiment was conducted to evaluate durability of catalyst.

CV experiment was repeated 1000 times to expose the catalyst to a severe environment and methanol oxidation current densities before and after addition of 0.001M POM were demonstrated in the CV curves, respectively (Fig. 10). As cycles of the CV experiment were repeated in a positive direction with reference to first cycle of the CV experiment after completely activating the catalyst, there were obtained the methanol oxidation current densities in the positive direction as illustrated in Fig. 11. Herein, i¹ means the first cycle after complete activation of the catalyst, while i represents each of methanol oxidation current densities of the corresponding cycle after the first cycle.

As shown in the drawings, it can be clearly understood that there is a great difference between oxidation current densities of the present inventive embodiments and the ones of the comparative controls.

### EXPERIMENTAL EXAMPLE 6

Fig. 12 is a graph illustrating CV curves obtained when H₃PMo₁₂O₄₀ is added to a methanol solution with different concentrations in the presence of PtRu/C catalyst as a noble metal catalyst according to a preferred embodiment of the present invention.

In order to identify influence of concentration on oxidation by a procedure disclosed in detailed description of the present invention, CV experiment was conducted by adding H₃PMo₁₂O₄₀ to the methanol solution with different concentrations (0.5 x 10⁻⁵M to 0.01M) in the presence of PtRu/C catalyst as a noble metal catalyst for fuel cell. By this experiment, oxidation effect of carbonaceous intermediates can be identified using H₃PMo₁₂O₄₀ even in a small amount thereof. On the other hand, when adding high concentration POM to the methanol solution, it was found that the fuel cell exhibits improved durability although oxidation current density thereof is decreased.

In Fig. 12, solid line A is a methanol oxidation current curve in the CV experiment at a three-electrode cell using 2M methanol solution as an electrolyte and dot line B is a methanol oxidation current curve measured by adding 0.01M POM to 2M methanol solution.

Dot line C is a methanol oxidation current curve measured by adding 0.001M POM to 2M methanol solution and dot line D is a methanol oxidation current curve measured by adding 5.0x10⁻⁵M POM to 2M methanol solution.

The fuel composition of the present invention is preferably used in manufacturing fuel cells. Thus, a variety of fuel cells including the fuel composition with improved performance as fuel can be fabricated according to the present invention. For example, the present fuel composition is preferably applied to catalysts made of noble metals such as Pt, Au, Ru, Ir, etc. and/or alloys containing the same. Additionally, the present fuel composition is also applied to catalysts made of non-noble metals and alloys thereof.

In consideration of scientific achievement and contribution expected by the present invention, since carbon monoxide is inevitably generated during reaction of an anode electrode on the basis of inherent characteristics of biomass molecules, there are lots of studies about electrochemical interaction between CO and metal electrode catalysts from investigations of CO removal and conversion of CO into electric energy. Results of the studies described above are expected to remarkably contribute in researches on electrode catalysts with poisoning resistance to CO, which is one of most common issues in existing hydrogen fuel cells.

The present invention is very important in terms of scientific and/or practical aspects. More particularly, in view of the scientific aspect, the present invention is preferably applied in existing low temperature solid polymeric fuel cell technology and/or in developments of electrode catalysts that can be obtained from biomass materials and be directly oxidized at low temperature and, thus, is inter-compatible with general fuel cell technology using hydrogen or methanol fuel.

In addition to CO removal according to the present invention, additional fuel can be ensured by generating hydrogen gas. Especially, for polyoxometalate as the oxidation assistant used in the present invention, the assistant is simple and economical because it requires no alternative and/or complex processes.

From the above experimental examples, it was identified that only a small amount of oxidation assistant can exhibit high oxidation of intermediates and, as a result, the present invention is believed to have great commercial merit.

Meanwhile, even though POM is produced in small amounts due to low demand and high cost under existing circumstances, it is obvious that mass production of POM can be realized and, in turn, considerably reduce the price of POM.

Consequently, with technological improvements as described above, it is clear that the present invention advances time for commercial use of portable fuel cells and, furthermore, contributes to a preferable ratio of alternative energy supply.

While the present invention has been described with reference to a limited number of preferred embodiments, it will be understood by those skilled in the art that various modifications, variations and applications may be made therein without departing from the scope of the present invention as defined by the appended claims.

## Claims

1. A fuel composition, comprising:
at least one of oxygenated hydrocarbons; and
at least one polyoxometalate and/or at least one redox reactive anion caused by dissolution of polyoxometalate in an organic medium containing solution and/or an aqueous solution.

2. The fuel composition according to claim 1, wherein the oxygenated hydrocarbons are compounds having -OH functional groups.

3. The fuel composition according to claim 2, wherein the oxygenated hydrocarbons comprise at least one selected from CH₄O, C₂H₆O, C₄H₁₀O, C₅H₁₂O, C₆H₁₄O, ethyleneglycol, glycerin and compounds having -COOH and/or -CHO groups.

4. The fuel composition according to claim 1, wherein the anion comprises at least one selected from Keggin anions, Wells-Dawson anions, Lindqvist anions and Anderson anions.

5. The fuel composition according to claim 1, wherein the polyoxometalate and/or at least one anion caused by dissolution of polyoxometalate comprise in a content ranging from 0.1 x 10⁻⁹M to 0.5M to total 1 liter of the residual ingredients containing at least one of the oxygenated hydrocarbons.

6. A fuel cell comprising:
an anode electrode;
a cathode electrode; and
a fuel composition which comprises at least one of oxygenated hydrocarbons, and at least one polyoxometalate and/or at least one redox reactive anion caused by dissolution of polyoxometalate in an organic medium containing solution and/or an aqueous solution.

7. The fuel cell according to claim 6, wherein the fuel cell uses at least one selected from noble metal catalysts and alloy containing noble metal catalysts as catalysts in either of the anode electrode or the cathode electrode.

8. The fuel cell according to claim 6, wherein the oxygenated hydrocarbons in the fuel composition are alcohols and, the fuel composition includes at least one selected from Keggin anions, Wells-Dawson anions, Lindqvist anions and Anderson anions.

9. The fuel cell according to claim 8, wherein the polyoxometalate and/or at least one anion caused by dissolution of polyoxometalate comprise in a content ranging from 0.1 x 10⁻⁹M to 0.5M to total 1 liter of the residual ingredients containing at least one of the oxygenated hydrocarbons.

## Patentansprüche

1. Brennstoffzusammensetzung, umfassend
mindestens einen aus sauerstoffhaltigen Kohlenwasserstoffen; und
mindestens ein Polyoxometalat und/oder mindestens ein redoxreaktives Anion, gebildet durch Auflösung von Polyoxometalat in einer ein organisches Medium enthaltenden Lösung und/oder einer wässrigen Lösung.

2. Brennstoffzusammensetzung nach Anspruch 1, wobei die sauerstoffhaltigen Kohlenwasserstoffe Verbindungen mit funktionellen -OH-Gruppen sind.

3. Brennstoffzusammensetzung nach Anspruch 2, wobei die sauerstoffhaltigen Kohlenwasserstoffe mindestens einen umfassen, gewählt aus CH₄O, C₂H₆O, C₄H₁₀O, C₅H₁₂O, C₆H₁₄O, Ethylenglycol, Glycerin und Verbindungen mit -COOH- und/oder - CHO-Gruppen.

4. Brennstoffzusammensetzung nach Anspruch 1, wobei das Anion mindestens eines umfasst, gewählt aus Keggin-Anionen, Wells-Dawson-Anionen, Lindqvist-Anionen und Anderson-Anionen.

5. Brennstoffzusammensetzung nach Anspruch 1, wobei das Polyoxometalat und/oder mindestens ein Anion, gebildet durch Auflösung von Polyoxometalat, in einem Gehalt im Bereich von 0,1 x 10⁻⁹ M bis 0,5 M auf insgesamt 1 Liter der restlichen Bestandteile, enthaltend mindestens einen der sauerstoffhaltigen Kohlenwasserstoffe, umfasst sind.

6. Brennstoffzelle, umfassend:
eine Anodenelektrode;
eine Kathodenelektrode; und
eine Brennstoffzusammensetzung, umfassend mindestens einen aus sauerstoffhaltigen Kohlenwasserstoffen, und mindestens ein Polyoxometalat und/oder mindestens ein redoxreaktives Anion, gebildet durch Auflösung von Polyoxometalat in einer ein organisches Medium enthaltenden Lösung und/oder einer wässrigen Lösung.

7. Brennstoffzelle nach Anspruch 6, wobei die Brennstoffzelle als Katalysatoren in entweder der Anodenelektrode oder der Kathodenelektrode mindestens einen verwendet, gewählt aus Edelmetallkatalysatoren und einer Legierung, welche Edelmetallkatalysatoren enthält.

8. Brennstofzelle nach Anspruch 6, wobei die sauerstoffhaltigen Kohlenwasserstoffe in der Brennstoffzusammensetzung Alkohole sind, und die Brennstoffzusammensetzung mindestens eines, gewählt aus Keggin-Anionen, Wells-Dawson-Anionen, Lindqvist-Anionen und Anderson-Anionen, beinhaltet.

9. Brennstoffzelle nach Anspruch 8, wobei das Polyoxometalat und/oder mindestens ein Anion, gebildet durch Auflösung von Polyoxometalat, in einem Gehalt im Bereich von 0,1 x 10⁻⁹ M bis 0,5 M auf insgesamt 1 Liter der restlichen Bestandteile, enthaltend mindestens einen der sauerstoffhaltigen Kohlenwasserstoffe, umfasst sind.

## Revendications

1. Composition combustible comprenant :
au moins un des hydrocarbures oxygénés ; et
au moins un polyoxométallate et/ou au moins un anion réactif redox produit par dissolution du polyoxométallate dans un milieu organique contenant une solution et/ou une solution aqueuse.

2. Composition combustible selon la revendication 1, dans laquelle les hydrocarbures oxygénés sont des composés ayant des groupements fonctionnels -OH.

3. Composition combustible selon la revendication 2, dans laquelle les hydrocarbures oxygénés comprennent au moins un sélectionné parmi CH₄O, C₂H₆O, C₄H₁₀O, C₅H₁₂O, C₆H₁₄O, l'éthylène glycol, la glycérine et les composés ayant des groupes -COOH et/ou -CHO.

4. Composition combustible selon la revendication 1, dans laquelle l'anion comprend au moins un sélectionné parmi les anions de Keggin, les anions de Wells-Dawson, les anions de Lindqvist et les anions d'Anderson.

5. Composition combustible selon la revendication 1, dans laquelle le polyoxométallate et/ou au moins un anion produit par dissolution du polyoxométallate comprennent, dans une teneur allant de 0,1 x 10⁻⁹ M à 0,5 M, jusqu'à un total de 1 litre des ingrédients résiduels contenant au moins un des hydrocarbures oxygénés.

6. Pile à combustible comprenant :
une électrode anodique ;
une électrode cathodique ; et
une composition combustible qui comprend au moins un des hydrocarbures oxygénés, et au moins un polyoxométallate et/ou au moins un anion réactif redox produit par dissolution du polyoxométallate dans un milieu organique contenant une solution et/ou une solution aqueuse.

7. Pile à combustible selon la revendication 6, laquelle pile à combustible utilise au moins un sélectionné parmi les catalyseurs de métaux nobles et les catalyseurs de métaux nobles contenant des alliages comme catalyseurs dans l'une de l'électrode anodique ou de l'électrode cathodique.

8. Pile à combustible selon la revendication 6, dans laquelle les hydrocarbures oxygénés dans la composition combustible sont des alcools et laquelle composition combustible comprend au moins un sélectionné parmi les anions de Keggin, les anions de Wells-Dawson, les anions de Lindqvist et les anions d'Anderson.

9. Pile à combustible selon la revendication 8, dans laquelle le polyoxométallate et/ou au moins un anion produit par dissolution du polyoxométallate comprennent, dans une teneur allant de 0,1 x 10⁻⁹ M à 0,5 M, jusqu'à un total de 1 litre des ingrédients résiduels contenant au moins un des hydrocarbures oxygénés.
